# EUROPEAN PATENT APPLICATION

(11) **EP 3 422 726 A1**
(43) Date of publication of application: **02.01.2019**
(21) Application number: 17769296.9
(22) Date of filing: 07.03.2017
(51) Int. Cl.: H04N 21/422, H04N 21/4415

(54) **INTELLIGENT TERMINAL CONTROL METHOD AND INTELLIGENT TERMINAL**

(30) Priority: 24.03.2016 CN 201610173937
(71) Applicant: Shenzhen Prtek Co. Ltd., Shenzhen, Guangdong 518026 (CN)
(72) Inventor: LIU, Guohua, Shenzhen Guangdong 518026 (CN)
(74) Representative: Manitz Finsterwald Patentanwälte PartmbB
(86) International application number: PCT/CN2017/075846
(87) International publication number: WO 2017/162019

(57) **Abstract**

Disclosed is an intelligent terminal control method, comprising: receiving an application request sent by an application program installed on an intelligent terminal, wherein the application request contains identity information about a user currently logging in to the application program; according to the application request, collecting a human face image of the user within a target area range; recognizing user identity information according to the human face image; determining whether the recognized user identity information matches the user identity information in the application request; if so, defining a matched user as a target user, and displaying the application request; collecting a motion track of a target part of the target user; recognizing the motion track and outputting a motion track recognition result; and performing a corresponding responding operation on the application request according to the motion track recognition result. In addition, also provided is an intelligent terminal.

## Description

### CROSS REFERENCE

The present application claims priority to Chinese Patent Application No. 2016101739378 filed in the Chinese Patent Office on Mar. 24, 2016, entitled "CONTROL METHOD AND SYSTEM OF INTELLIGENT TERMINAL, INTELLIGENT TERMINAL" the entire contents of which are incorporated herein by reference.

### FIELD OF THE INVENTION

The present application relates to the technical field of intelligent terminal control, and in particular, to a method of controlling intelligent terminal and an intelligent terminal.

### BACKGROUND OF THE INVENTION

In order to meet the diversified demands of users, increasing intelligent terminals, such as intelligent TVs, computers, tablets, and intelligent game machines, are installed with corresponding applications (such as MSN, QQ, WeChat, mailbox clients, etc.). These applications are often run in the background after the intelligent terminal is started. When these applications receive a new message or issue an operation request, the user needs to perform a corresponding operation through input devices such as a remote controller, a mouse, and a keyboard, and when the intelligent terminal has a plurality of operation users, any user can read the new message of the application or respond to the operation request. Since the personal information of some users is generally described or can be reflected on the application, the control method is disadvantageous to the privacy protection of the users and is inconvenient for the users to perform operations.

### SUMMARY

According to various embodiments of the present application, a method of controlling an intelligent terminal and an intelligent terminal are provided.

A method of controlling an intelligent terminal includes: receiving an application request sent by an application installed on the intelligent terminal; the application request comprises user identity information currently logged-in in the application; collecting a face image of a user within a target area according to the application request; recognizing user identity information according to the face image; determining whether the recognized user identity information matches with the user identity information in the application request; if yes, then marking a matching user as a target user and presenting the application request, collecting a motion trajectory of a target part of the target user, recognizing the motion trajectory and outputting a motion trajectory recognition result, and performing a corresponding responding operation on the application request according to the motion trajectory recognition result.

An intelligent terminal includes a processor and a memory having computer-readable instructions stored thereon which, when executed by the processor, cause the processor to perform steps of: receiving an application request sent by an application installed on the intelligent terminal; the application request comprises user identity information currently logged-in in the application; collecting a face image of a user within a target area according to the application request; recognizing user identity information according to the face image; determining whether the recognized user identity information matches with the user identity information in the application request; if yes, then marking a matching user as a target user and presenting the application request, collecting a motion trajectory of a target part of the target user, recognizing the motion trajectory and outputting a motion trajectory recognition result, and performing a corresponding responding operation on the application request according to the motion trajectory recognition result.

The details of one or more embodiments of the invention are set forth in the accompanying drawings and the description below. Other features, objects, and advantages of the invention will be apparent from the description, drawings, and claims.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flowchart of a method of controlling an intelligent terminal according to an embodiment.
FIG. 2 is a flowchart of a method of controlling an intelligent terminal according to another embodiment.
FIG. 3 is a flowchart of a method of controlling an intelligent terminal according to yet another embodiment.
FIG. 4 is a block diagram of intelligent terminal control according to an embodiment.
FIG. 5 is a block diagram of intelligent terminal control according to another embodiment.
FIG. 6 is a schematic diagram of an intelligent terminal according to an embodiment.

### DETAILED DESCRIPTION OF THE EMBODIMENTS

Embodiments of the invention are described more fully hereinafter with reference to the accompanying drawings. The various embodiments of the invention may, however, be embodied in many different forms and should not be construed as limited to the embodiments set forth herein. Rather, these embodiments are provided so that this disclosure will be thorough and complete, and will fully convey the scope of the invention to those skilled in the art.

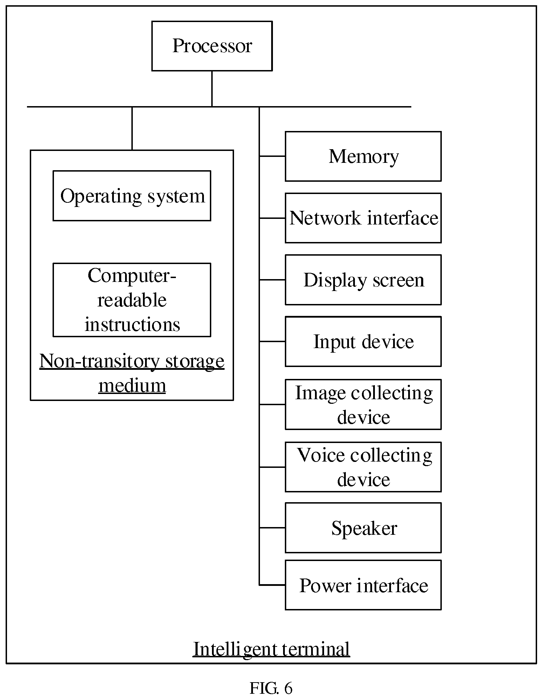

A method of controlling an intelligent terminal for controlling an intelligent terminal in which at least one application is installed. In an embodiment, the internal structure of the intelligent terminal is as shown in FIG. 6, which includes, a processor, a non-transitory storage medium, a communication interface, a power interface, a memory, a voice collecting device, an image collecting device, a display screen, a speaker, and an input device that are connected through a system bus. The storage medium of the intelligent terminal has an operating system as well as computer-readable instructions stored thereon. The computer-readable instructions, when executed by the processor, cause the processor to implement the method of controlling the intelligent terminal. At least one application is installed on the intelligent terminal, and the application runs in the environment provided by the operating system. The processor is configured to provide computing and control capabilities, support the operation of the entire intelligent terminal, and is configured to execute the flow of the method of controlling the intelligent terminal. The memory in the intelligent terminal provides an environment for the operation of the intelligent terminal control system in the storage medium. The network interface is used for connecting with a network side device to perform network communication. The display screen of the intelligent terminal may be a liquid crystal display screen or an electronic ink display screen. The input device may be a touch screen covered on the display screen, or may be a key, a trackball, or a touch pad provided on the housing of the intelligent terminal, or may be an external keyboard, a touch pad, a mouse etc. The voice collecting device may be a microphone carried by the intelligent terminal or an external microphone device. The image collecting device may be a camera carried by the intelligent terminal or an external camera.

The intelligent terminal may be a digital device such as an intelligent TV, a computer, a tablet computer, and an intelligent game machine. Such an intelligent terminal generally has a large display screen so that multiple users can simultaneously perform video watching, information sharing, and so on. Therefore, it can be understood that, the control method and system of the intelligent terminal can also be applied to devices such as intelligent phones and IPADs capable of being watched by multiple users at the same time. The application installed in the intelligent terminal may be an application carried in the system or a third-party application downloaded and installed by a user. The application may include an instant messaging application such as MSN, QQ, WeChat, Facebook, Fetion, etc., and may also include an application such as text message, phone call, e-mail, knowledge answering, etc. Hereinafter, the intelligent TV is taken as an example for description, and at least one type of instant messaging application in MSN, QQ or WeChat is installed on the intelligent TV.

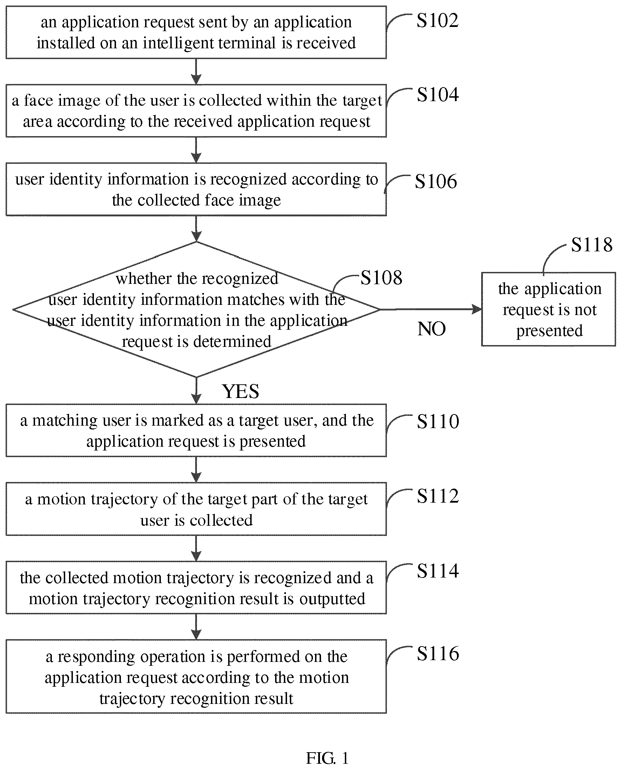

As shown in FIG. 1, a method of controlling an intelligent terminal according to an embodiment includes the following steps:

In step S102: an application request sent by an application installed on an intelligent terminal is received.

After the intelligent terminal is started, some applications will enter the background running according to the setting or use of by user. For example, after the intelligent TV is turned on, the user runs an instant messaging application installed on the intelligent TV, such as an MSN, a QQ or a WeChat application, as well as an E-mail application. In general, when these applications are not used by the user, these applications will go into background operation in order to save resources. When a new message is received or information such as related version upgrade information and abnormality information are detected by the application, an application request is sent by the application to the user. In a conventional intelligent terminal, when a new message is received by the QQ other applications, a prompt of receiving the new message is generally issued by means of a blinking icon or voice. Some intelligent terminals will directly display the received new message on a display screen. Therefore, when the new message is a private message and multiple users are watching the intelligent terminal at the same time, individual privacy protection is at stake. In this embodiment, when an application request is sent by the application, the message will not be prompt or displayed immediately.

User identity information currently logged-in in the application should be included in the received application request. If the application that sent the application request is a system application or other applications that can be used without login, the currently logged-in user is the default user of the intelligent terminal, that is, the user information is the default user information. The default user may be set by the user. There may be one or more default users. In this embodiment, the user identity information may include user name and user ID that can be uniquely identified by the intelligent terminal.

In step S104: a face image of the user is collected within the target area according to the received application request.

The target area generally refers to the area in front of the display screen of the intelligent terminal, and needs to be determined according to the collecting angle of the image collecting device such as the camera. The image collecting device may be a device carried by the intelligent terminal, and may also be an external device accessed to the intelligent terminal through a connection port. When there are multiple users in the target area, face images of the multiple users will be collected. Specifically, the image collecting device may collect an image within the target area by imaging, so as to recognize a human face in the collected image. In this embodiment, the marking module marks the recognized face, for example, sets an identifier (for example, a code) for the recognized face. The marking module may also perform marking before the face recognition. In this embodiment, the image collecting device may perform motion tracking on the face recognized in the target area. When it is detected that a user is left, the marking module may clear the marking of the user, that is, stop the employment of the marking code of the user. When the image collecting module collects that a new user entered the target area, only the face image of the newly entered user in the target area is collected through the tracking technology, and after face recognition is performed on the user, marking is performed through the marking module.

In step S106: user identity information is recognized according to the collected face image.

Specifically, facial feature information of the user is extracted according to the collected face image. Since different users have different facial feature information, the extracted facial feature information may be compared with pre-stored facial feature information of each user to determine user identity information corresponding to the collected facial images. In this embodiment, frequent-user identity information will be pre-stored in the intelligent terminal and the facial feature information matched with the user identity information, so as to recognize the user identity information according to the collected face image. In other embodiments, the user identity information and the face image matched with the user identity information may be pre-stored in the intelligent terminal, so as to compare the collected face image with the pre-stored face image. When a similarity exceeds a preset value, the two may be considered to be the same, thereby recognizing the user identity information corresponding to the face image. In another embodiment, the frequent-user identity information and the facial feature information matched with the user identity information are stored on a cloud server or a remote server. Therefore, the intelligent terminal can collect the related information from the cloud server or the remote server to complete the face recognition.

In step S108: whether the recognized user identity information matches with the user identity information in the application request is determined.

Whether the user currently logging on the application issuing the application request is within the target area is determined by determining whether the recognized user identity information matches with the user identity information in the application request. For example, the QQ logged-in by A in the current intelligent TV issues an application request, and then the face recognition on a user within a target area of the intelligent TV (a front viewing region) is performed to confirm whether A is within the target area, that is, whether A is watching the intelligent TV. When it is determined that the recognized user identity information matches with the user identity information in the application request (that is, when the user logged-in in the application sending the application request is within the target area), S110 and subsequent steps are performed; otherwise, S118 is performed. In this embodiment, S104 is to collect face images of multiple users in the target area of the intelligent terminal at the same time. In other embodiments, S104, S106 and S108 may be repeatedly executed in sequence, that is, after face images of a user are collected in sequence, the user is identified and whether the user identity information matches with the user identity information in the application request is determined, and if not, S104, S106 and S108 are continued, until the determination result of S 108 is YES or all users within the target area are judged.

In step S110: a matching user is marked as a target user, and the application request is presented.

Marking the matching user as the target user is mainly marking the location information of the matching user, thereby facilitating subsequent operations. The application request is presented only after the target user is confirmed to be within the target area, thereby avoiding the interference of the application request to the currently watching user and the leakage of the logged-in user information when the target user is not within the target area, which is beneficial to improving information security. The application request may be directly displayed at a preset position of the intelligent terminal or voice prompt by voice. When the application request is voice prompt by voice, the application other than the target application on the intelligent terminal is controlled to be in a silent or pause mode at the same time of voice prompt.

In step S112: a motion trajectory of the target part of the target user is collected.

After displaying the application request, the intelligent terminal enters a trajectory recognition mode to recognize the motion trajectory of the target part of the target user. In this embodiment, the target site is the head. The motion trajectory refers to a trajectory of swinging of the head, such as swinging left and right or up and down. In other embodiments, the target portion may also be the hand, and the motion trajectory may be a trajectory of swinging of the hand or a static gesture formed when the hand is finally stationary.

In step S114: the collected motion trajectory is recognized and a motion trajectory recognition result is outputted.

The collected motion trajectory is recognized so as to output a motion trajectory recognition result. A motion trajectory library is predefined on the intelligent terminal or the server, and each motion trajectory corresponds to a response instruction. In this embodiment, the target part is a head, and therefore, a nodding motion trajectory and a shaking motion trajectory are defined in the motion trajectory library, so that whether the head motion is a nodding or shaking motion may be determined according to the collected motion trajectory. In other embodiments, the target portion may also be a hand, and the motion trajectory library may define motion trajectories, such as left and right wobbles, up and down wobbles, and back and forth wobbles, or quickly recognized character tracks, such as "W", "V", and "✔" etc.

In step S116: a responding operation is performed on the application request according to the motion trajectory recognition result.

In the motion trajectory library, in the meanwhile of storing the motion trajectories respectively defined, responding operations one-to-one corresponding to the motion trajectories also are stored, such as accepting the application request and rejecting the application request.

In this embodiment, the responding operation corresponding to the defined nodding motion trajectory in the motion trajectory library is to receive the application request, that is, to show or play the received new message; the shaking is correspondingly denying the application request, that is, the received new message is not shown or played while controlling that the application request is no longer presented. For example, when the user A is detected to be within the target area, the intelligent TV presents the application request of the QQ, such as "A has a new message, read it?" and the like. It can be understood that, an identifier that can reflect the identity information of the user currently logged-in is also shown in the presented application request. Thus, when A sees or hears the application request, if he/she can nod if he/she would like to read the message. After the nodding motion of A is collected by the intelligent TV, it can be determined that A agrees to present or play the new message, and the new message is presented or played. And A can shake his head when he/she does not want to read personal messages in front of people. After the shaking motion of A is collected by the intelligent TV, it may be determined that A does not agree to display the new message, and the new message is not displayed or played, and in the meanwhile, the presenting of the application request is closed, so as not to affect the user to continue watching the video program.

For another example, when new versions are detected by some applications, an application request prompting whether to perform an automatic version upgrade is typically sent. A responding operation can also be made to the application request by the above control method. That is, when it is detected that the user currently logged-in in the application (or the default user) is within the target area, the application request of the version upgrade is presented, and the target user may nod to agree to the upgrade or shake to reject the upgrade request after the application request is presented.

The foregoing control method may also be applied to the knowledge Q&A process of the intelligent terminal. For example, after the knowledge Q&A application is started, the motion trajectory of the target user is recognized, so as to collect an answer made by the user according to the recognition result of the motion trajectory and enter the next question. Specifically, when it is recognized that the user shook his/her head, it can be determined that the answer made by the user is No, and when it is recognized that the user nodded, it can be determined that the answer made by the user is Yes. Alternatively, the motion trajectory or static gesture corresponding to the answer option may be predefined, so that the answer option of the user may be determined as "A" or "B" after the user made the corresponding gesture or motion trajectory. In this embodiment, the memory module also stores the answer record of the user.

In step S118: the application request is not presented.

When the target user is not within the target area, the application request is not presented so as not to affect the normal watching of the current user.

According to the foregoing method of controlling the intelligent terminal, when an application on the intelligent terminal issues an application request, face information of the user in the target area is firstly collected to determine whether the user logged-in in the application is within the target area. The application request in only presented when it is within the target area. The motion trajectory of the target part of the user is collected so as to perform a corresponding responding operation on the application request of the application according to the motion trajectory recognition result. The user can perform the responding operation without directly contacting the intelligent terminal or using other devices, the operation is easy and the information security is favorable.

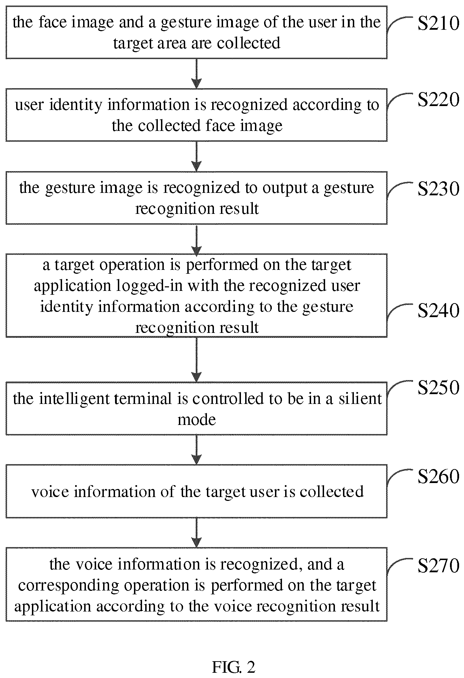

In another embodiment, the method of controlling the intelligent terminal further includes the following steps, as shown in FIG. 2.

In step S210: the face image and a gesture image of the user in the target area are collected.

The image collecting module of the intelligent terminal performs an external image collecting at intervals, so as to collect the face image and the gesture image of the user in the target area.

In step S220: user identity information is recognized according to the collected face image.

The identity information of the user may be determined according to the collected face image. For example, feature extraction is performed on the collected face image, so that the extracted facial feature information is compared with pre-stored facial feature information of each user to recognize identity information of the user.

In step S230: the gesture image is recognized to output a gesture recognition result.

In this embodiment, the gesture image is a static gesture image. A gesture library may also be defined by the intelligent terminal or the server, so as to compare the collected gesture image with a gesture in the gesture library to output the gesture recognition result.

In step S240: a target operation is performed on the target application logged-in with the recognized user identity information according to the gesture recognition result.

Specifically, each of the gestures in the gesture library corresponds to a target operation on a one-to-one basis. For example, an OK gesture corresponds to launching the QQ, and a V gesture corresponds to launching the WeChat. Therefore, the target application logged-in with the user identity information can be operated according to the gesture recognition result. For another example, when the B user would like launch the QQ logged-in in the intelligent TV, the user B only have to make an OK gesture. After collecting the facial image and gesture image, the image collecting module can recognize the identity and gesture of the user B, so as to launch the QQ logged-in. The operation process also does not require the user to touch the intelligent terminal or help by a remote controller, which is convenient to the user. Also, the user can only access a corresponding application logged-in with the identity information of the very user and cannot access a target application logged-in with other users, thereby further improving information security.

In this embodiment, the method of controlling the intelligent terminal further includes steps S250 to S270.

In step S250: the intelligent terminal is controlled to be in a silent mode.

When the user operates the target application, in order to avoid interference, the intelligent terminal may be set to a silent mode so as not to affect the user's operation on the target application. It is understood that the intelligent terminal may be controlled to enter the silent mode by adjusting the volume of the intelligent terminal to 0 or pausing an application currently running on the intelligent terminal.

In step S260: voice information of the target user is collected.

After the user issues the instruction to perform the target operation on the target application, the user can be determined as the target user. Therefore, the voice information issued by the target user is collected to perform a subsequent operation on the target application. The collection of voice information is performed only for the target user so as to reduce the workload of the voice collection module and the recognizing module.

In step S270: the voice information is recognized, and a corresponding operation is performed on the target application according to the voice recognition result.

By recognizing the content of the voice information, the target operation object and the target operation instruction are recognized. For example, after the QQ is launched by the user B according to the gesture, the user B needs to send voice information to a friend C, voice information such as "send a voice message to C", "send C a voice message" can be sent or, directly, the name of C may be spoke. The voice recognizing module may recognize that the target object is C according to the received voice information, and the target operation is to send the voice information. Then, the dialog box with C is popped up and the recording function is turned on. The intelligent terminal may control the recording module to end the recording and send or stop sending the recording according to the voice instruction issued, the pause duration, and other actions by the user. For example, the recording module may be controlled to end recording and send the voice message when the duration of the voice input pause of the user is longer than a preset time. When the user directly speaks the name of C, the intelligent terminal finds C from the friend list and pops up the dialog box of C. After the dialog box of C is popped up, the user may input a corresponding voice instruction, gesture or the like to perform a corresponding operation, such as sending voice information, performing a video call etc.

Through the foregoing method of controlling the intelligent terminal, some basic operations may also be performed on the application on the intelligent terminal, thereby facilitating user operations. Moreover, the operations can similarly be performed only for authorized applications, which improves information security.

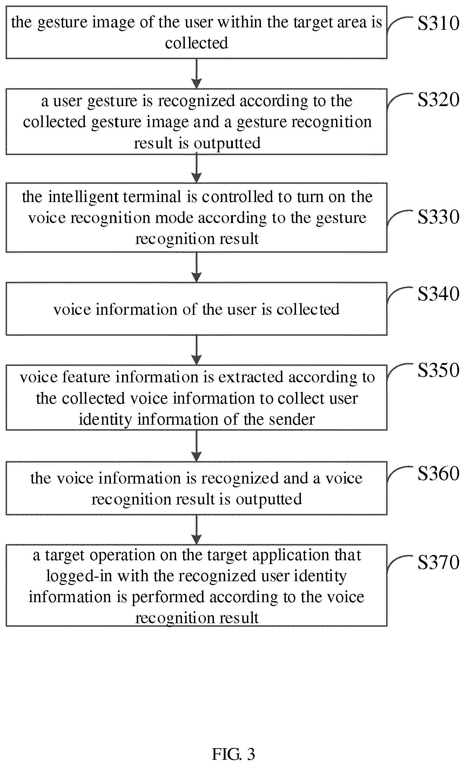

In another embodiment, the foregoing method of controlling the intelligent terminal further includes the following steps, as shown in FIG. 3.

In step S310: the gesture image of the user within the target area is collected.

The image collecting module of the intelligent terminal performs external image collecting at intervals, so as to collect the gesture image of the user in the target area. In this embodiment, the face image does not have to be collected when performing gesture image recognition.

In step S320: a user gesture is recognized according to the collected gesture image and a gesture recognition result is outputted.

When only the user gesture image is recognized, the gesture recognition result is mainly to turn on a voice recognition mode. The gesture may be customized by the user, for example, defining that the voice recognition mode is to be turned on when the gesture is a fist.

In step S330: the intelligent terminal is controlled to turn on the voice recognition mode according to the gesture recognition result.

When the intelligent terminal is controlled to turn on the voice recognition mode, the intelligent terminal is controlled to enter the silent mode, thereby preventing the sound made by the intelligent terminal from interfering with the voice collection by the voice collection module.

In step S340: voice information of the user is collected.

The collecting of the voice information of the user is started after entering the voice recognition mode. The voice collection module may confirm whether to end the collecting of the voice information according to the pause duration or the gesture of the user.

In step S350: voice feature information is extracted according to the collected voice information to collect user identity information of the sender.

In this embodiment, user identity information and voice feature information matched with the user identity information are pre-stored on the intelligent terminal. Accordingly, the extracted voice feature information is compared with pre-stored voice feature information to collect user identity information of the sender.

In step S360: the voice information is recognized and a voice recognition result is outputted.

The voice information is recognized to identify the target application and the target operation. For example, if the user D needs to launch QQ, voice information of "start QQ" or "launch QQ" may be sent. According to the collected voice feature information of the voice information, it can be determined that the voice information is sent by D, the target application is QQ, and the target operation is ON. The recognition result is outputted so that the interactive control module launch the QQ logged-in by D.

In step S370: a target operation on the target application that logged-in with the recognized user identity information is performed according to the voice recognition result.

The target operation may be performed on the target application logged-in with the identity information of the sender of the voice information according to the recognized voice result.

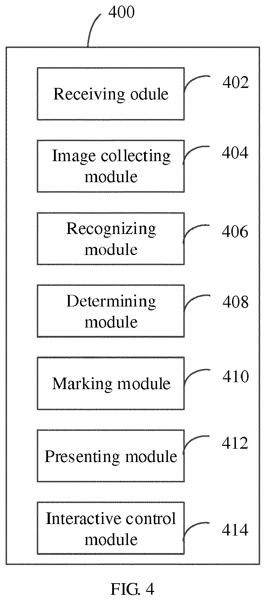

As shown in FIG. 4, in one embodiment, an intelligent terminal 400 is provided. The internal structure of the intelligent terminal 400 may correspond to the structure as shown in FIG. 6, and each module described below may be implemented by software or a combination thereof in full or in part. The intelligent terminal 400 includes a receiving module 402, an image collecting module 404, a recognizing module 406, a determining module 408, a marking module 410, a presenting module 412, and an interactive control module 414.

The receiving module 402 is configured to receive an application request sent by an application. The application request includes user identity information that is currently logged-in in the application. The image collecting module 404 is configured to collect the face image of the user within the target area. The recognizing module 406 is configured to recognize user identity information according to the collected face image. The determining module 408 is configured to determine whether the recognized user identity information matches with the user identity information in the application request. The marking module 410 is configured to mark the matched user as the target user. The presenting module 412 is configured to present the application request when the determination result of the determining module 408 is YES. The image collecting module 404 is further configured to collect a motion trajectory of the target part of the target user. The recognizing module 406 is further configured to recognize the motion trajectory and output a motion trajectory recognition result. The interaction control module 414 is configured to perform a corresponding responding operation on the corresponding application request according to the motion trajectory recognition result.

The intelligent terminal 400 collects the face information of the user in the target area to determine whether the user logged-in in the application is within the target area when the application on the intelligent terminal issues an application request, and presents the application request only when the user is within the target area. The motion trajectory of the target part of the user is collected so as to perform a corresponding responding operation on the application request of the application according to the motion trajectory recognition result. The user can perform the responding operation without directly contacting the intelligent terminal or help by other devices, the operation is simple and the information security is favorable.

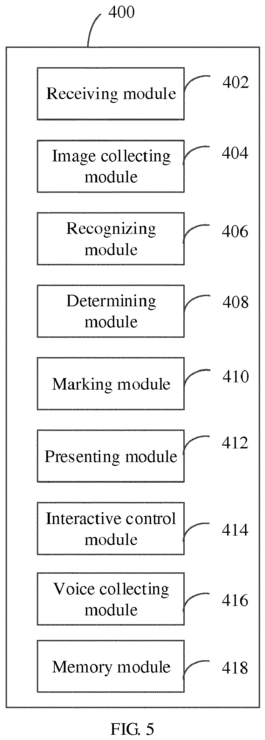

In another embodiment, the intelligent terminal 400 further includes a voice collecting module 416, as shown in FIG. 5. In this embodiment, the image collecting module 404 is further configured to collect the face image and the gesture image of the user in the target area. The recognizing module 406 is further configured to recognize user identity information according to the collected face image, perform gesture recognition on the gesture image, and output a gesture recognition result. The gesture recognition result is to perform the target operation on the target application. The interaction control module 414 is further configured to perform the target operation on the target application logged-in with the recognized user identity information according to the result of the gesture recognition. In this embodiment, the interaction control module 414 is further configured to control the intelligent terminal to be in the silent mode. The voice collecting module 416 is configured to collect voice information of the target user. The recognizing module 406 is further configured to recognize the voice information and output a voice recognition result. The interaction control module 414 is further configured to perform a corresponding operation on the target application according to the voice recognition result.

In another embodiment, the image collecting module 404 in the intelligent terminal 400 is further configured to collect gesture images of the user in the target area. The recognizing module 406 is further configured to recognize a user gesture according to the gesture image and output a gesture recognition result. The gesture recognition result is to turn on a voice recognition mode. The interaction control module 414 is further configured to control the intelligent terminal to turn on the voice recognition mode according to the gesture recognition result. The voice collecting module 416 is configured to collect voice information of the user. The recognizing module 406 is further configured to extract voice feature information according to the voice information to collect user identity information of the sender, recognize the voice information, and output a voice recognition result. The voice recognition result is to perform the target operation on the target application. The interaction control module 414 is further configured to perform the target operation on the target application logged-in with the recognized user identity information according to the voice recognition result.

In this embodiment, the intelligent terminal 400 further includes a memory module 418. The storing module 418 is configured to store user identity information, as well as facial feature information and voice feature information and so on that match with the user identity information. In one embodiment, the memory module 418 is configured in the intelligent terminal or directly utilizes the memory in the intelligent terminal for storage. In another embodiment, the memory module 418 is a cloud memory or a remote server.

In one embodiment, an intelligent terminal is provided that includes a processor and memory having computer-readable instructions stored therein which, when executed by the processor, causes the processor to perform the following steps: an application request from an application installed on the intelligent terminal is received; the application request includes user identity information that is currently logged-in in the application; a face image of a user within a target area is collected according to the application request; user identity information is recognized according to the face image; whether the identified user identity information matches with the user identity information in the application request is determined; if yes, the matched user is marked as a target user, and the application request is presented, the motion trajectory of the target part of the target user is collected, the motion trajectory is recognized and a motion trajectory recognition result is outputted, and a corresponding responding operation is performed on the application request according to the motion trajectory recognition result. Presenting the application request is to present the application request at a preset position of the intelligent terminal or to voice prompt by voice. Furthermore, in an embodiment, when the voice prompt is performed by voice, the computer-readable instructions further cause the processor to perform: applications other than the target application on the intelligent terminal are controlled to be in the silent or pause mode.

In this embodiment, when it is determined that the recognized user identity information does not match with the user identity information in the application request, the computer-readable instruction further causes the processor to execute: the application request is not presented.

In an embodiment, when the voice prompt is performed by voice, the computer-readable instructions further cause the processor to perform: applications other than the target application on the intelligent terminal are controlled to be in the silent or pause mode.

In an embodiment, when the computer-readable instructions are executed by the processor, the processor is further caused to execute: respectively defined motion trajectories are pre-stored, and responding operations one-to-one corresponding to the motion trajectories are stored.

In an embodiment, when the computer-readable instructions are executed by the processor, the processor is further caused to perform the following steps: a face image and a gesture image of a user within a target area are collected; user identity information is recognized according to the face image; gesture recognition is performed on the gesture image and a gesture recognition result is outputted; the gesture recognition result is to perform a target operation on a target application; and the target operation is performed on the target application logged-in with the recognized user identity information according to a gesture recognition result.

In an embodiment, after the target operation is performed on the target application logged-in with the recognized user identity information according to the gesture recognition result, the computer-readable instructions further cause the processor to perform: the intelligent terminal is controlled to be in a silent mode; voice information of a target user is collected; the voice information is recognized and a voice recognition result is outputted; a corresponding operation is performed on the target application according to the voice recognition result.

In an embodiment, the computer-readable instructions, when executed by the processor, further cause the processor to perform the following steps: a gesture image of the user is collected within the target area; a user gesture is recognized according to the gesture image and a gesture recognition result is outputted; the gesture recognition result is to turn on a voice recognition mode; the intelligent terminal is controlled to turn on the voice recognition mode according to the gesture recognition result; voice information of the user is collected; voice feature information is extracted according to the voice information to collect user identity information of the sender; the voice information is recognized and a voice recognition result is outputted; the voice recognition result is to perform a target operation on a target application; and the target operation on the target application logged-in with the recognized user identity information is performed according to the voice recognition result.

In an embodiment, the collection of the voice information of the user includes: whether to end the collection of the voice information is determined according to a pause duration or a gesture of the user.

In an embodiment, the computer-readable instructions, when executed by the processor, further cause the processor to execute the step: user identity information and facial feature information matched with the user identity information are stored; the recognizing user identity information according to the face image includes: facial feature information of the user is extracted according to the face image; and user identity information matched with the facial feature information is collected according to the facial feature information.

Persons of ordinary skill in the art understand that all or part of the processes in the methods of the foregoing embodiments may be implemented by a computer program instructing relevant hardware. The program may be stored in a computer-readable storage medium. When the program is executed, the processes of the methods described above may be included. The storage medium may be a non-transitory storage medium such as a magnetic disk, an optical disk, a read-only memory (ROM), or a random access memory (RAM).

The foregoing respective technical features involved in the respective embodiments can be combined arbitrarily, for brevity, not all possible combinations of the respective technical features in the foregoing embodiments are described, however, to the extent they have no collision with each other, the combination of the respective technical features shall be considered to be within the scope of the description.

The foregoing implementations are merely specific embodiments of the present disclosure, and are not intended to limit the protection scope of the present disclosure. It should be noted that any variation or replacement readily figured out by persons skilled in the art within the technical scope disclosed in the present disclosure shall all fall into the protection scope of the present disclosure. Therefore, the protection scope of the present disclosure shall be subject to the protection scope of the claims..

## Claims

1. A method of controlling an intelligent terminal, comprising:
receiving an application request sent by an application installed on the intelligent terminal; the application request comprises user identity information currently logged-in in the application;
collecting a face image of a user within a target area according to the application request;
recognizing user identity information according to the face image;
determining whether the recognized user identity information matches with the user identity information in the application request;
if yes, then
marking a matching user as a target user and presenting the application request,
collecting a motion trajectory of a target part of the target user,
recognizing the motion trajectory and outputting a motion trajectory recognition result, and
performing a corresponding responding operation on the application request according to the motion trajectory recognition result.

2. The method of claim 1, wherein in the determining whether the recognized user identity information matches with the user identity information in the application request, the application request is not displayed if the recognized user identity information does not match with the user identity information in the application request.

3. The method of claim 1, wherein the displaying the application request is to display the application request at a preset position of the intelligent terminal or perform a voice prompt by voice.

4. The method of claim 3, wherein when the voice prompt by voice is performed by voice, other applications except the target application on the intelligent terminal are controlled to be in a silent or pause mode.

5. The method of claim 1, further comprising:
pre-storing respectively defined motion trajectories, and storing responding operations corresponding to the motion trajectories in a one-to-one correspondence.

6. The method of claim 1, further comprising:
collecting a face image and a gesture image of a user within a target area;
recognizing the user identity information according to the face image;
performing a gesture recognition on the gesture image and outputting a gesture recognition result; wherein the gesture recognition result is to perform a target operation on a target application; and
performing the target operation on the target application logged-in with the recognized user identity information according to the gesture recognition result.

7. The method according to claim 6, wherein after the performing the target operation on the target application logged-in with the recognized user identity information according to the gesture recognition result, the method further comprises:
controlling the intelligent terminal to be in a silent mode;
collecting voice information of the target user;
recognizing the voice information and outputting a voice recognition result; and
performing a corresponding operation on the target application according to the voice recognition result.

8. The method of claim 1, further comprising:
collecting a gesture image of the user within the target area;
recognizing a user gesture according to the gesture image and outputting a gesture recognition result; the gesture recognition result is to turn on a voice recognition mode;
controlling the intelligent terminal to turn on the voice recognition mode according to the gesture recognition result;
collecting voice information of the user;
extracting voice feature information according to the voice information to collect user identity information of a sender;
recognizing the voice information and outputting a voice recognition result; the voice recognition result is to perform a target operation on a target application; and
performing the target operation on the target application logged-in with the recognized user identity information according to the voice recognition result.

9. The method of claim 8, wherein the collecting the voice information of the user comprises: confirming whether to end the collecting of the voice information according to a pause duration or the user gesture.

10. The method of claim 1, wherein the method further comprises storing user identity information and facial feature information matched with the user identity information;
the step of recognizing the user identity information according to the face image comprises:
extracting facial feature information of the user according to the face image; and
collecting user identity information matched with the facial feature information according to the facial feature information.

11. An intelligent terminal, comprising a processor and a memory having computer-readable instructions stored thereon which, when executed by the processor, cause the processor to perform steps of:
receiving an application request sent by an application installed on the intelligent terminal; the application request comprises user identity information currently logged-in in the application;
collecting a face image of a user within a target area according to the application request;
recognizing user identity information according to the face image;
determining whether the recognized user identity information matches with the user identity information in the application request;
if yes, then
marking a matching user as a target user and presenting the application request,
collecting a motion trajectory of a target part of the target user,
recognizing the motion trajectory and outputting a motion trajectory recognition result, and
performing a corresponding responding operation on the application request according to the motion trajectory recognition result.

12. The intelligent terminal of claim 11, wherein when it is determined that the recognized user identity information does not match with the user identity information in the application request, the computer-readable instruction further causes the processor to execute: not presenting the application request.

13. The intelligent terminal of claim 11, wherein the displaying the application request is to display the application request at a preset position of the intelligent terminal or perform a voice prompt by voice.

14. The intelligent terminal of claim 13, wherein when the voice prompt by voice is performed, the computer-readable instructions further cause the processor to perform: controlling applications other than the target application on the intelligent terminal to be in a silent or pause mode.

15. The intelligent terminal of claim 11, wherein, when the computer-readable instructions are executed by the processor, the processor is further caused to perform: pre-storing respectively defined motion trajectories, and storing responding operations corresponding to the motion trajectories in a one-to-one correspondence.

16. The intelligent terminal of claim 11 wherein when the computer-readable instructions are executed by the processor, the processor is further caused to perform the following steps:
collecting the face image and a gesture image of the user within the target area;
recognizing the user identity information according to the face image;
performing gesture recognition on the gesture image and outputting a gesture recognition result; the gesture recognition result is to perform a target operation on a target application; and
performing the target operation on the target application logged-in with the recognized user identity information according to the gesture recognition result.

17. The intelligent terminal of claim 16 wherein after the target operation is performed on the target application logged-in with the recognized user identity information according to the gesture recognition result, the computer-readable instructions further cause the processor to perform:
controlling the intelligent terminal to be in a silent mode;
collecting voice information of the target user;
recognizing the voice information and outputting a voice recognition result; and
performing a corresponding operation on the target application according to the voice recognition result.

18. The intelligent terminal of claim 11 wherein when the computer-readable instructions are executed by the processor, the processor is further caused to perform the following steps:
collecting a gesture image of the user within the target area;
recognizing a user gesture according to the gesture image and outputting a gesture recognition result; the gesture recognition result is to turn on a voice recognition mode;
controlling the intelligent terminal to turn on the voice recognition mode according to the gesture recognition result;
collecting voice information of the user;
extracting voice feature information according to the voice information to collect user identity information of a sender;
recognizing the voice information and outputting a voice recognition result; the voice recognition result is to perform a target operation on a target application;
performing the target operation on the target application logged-in with the recognized user identity information according to the voice recognition result.

19. The intelligent terminal of claim 18, wherein collecting the voice information of the user comprises: determining whether to end the collecting of the voice information according to a pause duration or a gesture of the user.

20. The intelligent terminal of claim 11, wherein when the computer-readable instructions are executed by the processor, the processor is further caused to execute the step of storing user identity information and facial feature information matched with the user identity information;
the recognizing the user identity information according to the face image comprises: extracting the facial feature information of the user according to the face image; and
collecting the user identity information matched with the facial feature information according to the facial feature information.
